# EUROPEAN PATENT APPLICATION

(11) **EP 3 223 264 A1**
(43) Date of publication of application: **27.09.2017**
(21) Application number: 17157715.8
(22) Date of filing: 23.02.2017
(51) Int. Cl.: G09B 23/30

(54) **RIBS FOR CRASH TEST DUMMY**

(30) Priority: 25.03.2016 US 201662313262 P; 30.01.2017 US 201715419168
(71) Applicant: Humanetics Innovative Solutions, Inc., Plymouth, MI 48170 (US)
(72) Inventor: DEPINET, Paul, Norwalk, OH Ohio 44857 (US)
(74) Representative: Wilson, Alan Stuart

(57) **Abstract**

A rib for a crash test dummy includes a metal band, a plurality of layers of damping material disposed on a portion of the metal band, and a cover coupled to the layers.

## Description

### Field of the Invention

The present invention relates generally to crash test dummies and, more particularly, to ribs for a crash test dummy.

### Description of the Related Art

Automotive, aviation, and other vehicle manufacturers conduct a wide variety of collision testing to measure the effects of a collision on a vehicle and its occupants. Through collision testing, a vehicle manufacturer gains valuable information that can be used to improve the vehicle, authorities examine vehicles to submit type approval, and consumer organizations provide information on vehicle safety ratings to the public.

Impact testing often involves the use of anthropomorphic test devices (ATDs), better known as "crash test dummies." During the testing, an operator places a crash test dummy inside a vehicle, and the vehicle undergoes a simulated collision, UBB, or ejection. The testing exposes the crash test dummy to high inertial loading, and sensors inside the crash test dummy, such as load cells, displacement sensors, accelerometers, pressure gauges, angle rate sensors, and the like, generate electrical signals of data corresponding to the loading. Cables or wires transmit these electrical signals of data to a data acquisition system (DAS) for subsequent processing. This data reveals information about the effects of the impact on the crash test dummy and can be correlated to the effects a similar impact would have on a human occupant.

In order to obtain more accurate test data, test engineers attempt to maximize what is known as the "biofidelity" of the crash test dummy. Biofidelity is a measure of how well the crash test dummy reacts like a human being in a vehicle impact test environment. A crash test dummy reacting as an actual human during a collision is said to have a high biofidelity. Accordingly, a crash test dummy having a high biofidelity will provide more accurate information from a collision test relative to the effect of the collision on a human being. Thus, ATD design engineers design crash test dummies with the proper anthropometry that reflects a total weight, center of gravity, mass moment of inertia and range of motion similar to that of a human body so as to increase the biofidelity of the crash test dummy.

The crash test dummy typically includes a head assembly, spine assembly (including neck), rib cage assembly, abdomen, pelvis assembly, right and left arm assemblies, and right and left leg assemblies. Generally, the rib cage assembly includes a plurality of ribs. The ribs are typically connected to the spine assembly.

Currently, the ribs of the crash test dummy use "free layer" damping. This type of construction glues damping material to the inside of a spring steel band to create the rib. The batch to batch variability of the damping material and the inability to separately tune the hysteresis, force, and deflection parameters of the rib sets exist. However, it is desirable to make ribs that are more human-like. It is also desirable to adjust the damping material to tune the three-dimensional rib response when using a steel rib. Thus, there is a need in the art for new ribs and a method of tuning performance of the ribs for a crash test dummy.

### Summary of the Invention

Accordingly, the present invention is a rib for a crash test dummy. The rib includes a metal band, a plurality of layers of damping material disposed on a portion of the metal band, and a cover coupled to the layers.

In addition, the present invention is a crash test dummy including a body and a rib cage assembly operatively attached to the body. The rib cage assembly includes a plurality of ribs. Each of the ribs includes a metal band, a plurality of layers of damping material disposed on a portion of the metal band, and a cover coupled to the layers.

One advantage of the present invention is that a new rib is provided for a crash test dummy. Another advantage of the present invention is that the rib includes a metal band and at least two layers of damping material attached to the metal band to provide a three-dimensional rib having constrained layer dampening. Yet another advantage of the present invention is that the rib can be made of a composite damping material to tune rib performance to make ribs more humanlike than ever before. Still another advantage of the present invention is that a method of making ribs is provided for adjusting the damping material to tune the response or performance of the ribs using different damping materials when using a metal rib for the crash test dummy or anthropomorphic test device.

The rib, or the crash test dummy, may further comprise, in any workable combination, any one or more features of the embodiments of the invention which are described below.

The present invention further provides a rib for a crash test dummy comprising: a "C" shaped metal band; a plurality of layers of damping material disposed on arcuate portions of said metal band; an adhesive to bond said layers to said metal band such that a bond line is parallel to said metal band; and a cover coupled to said layers.

The present invention still further provides a rib for a crash test dummy comprising: a "C" shaped metal band; a plurality of layers of damping material disposed on arcuate portions of said metal band; an adhesive to bond said layers to said metal band such that a bond line is perpendicular to said metal band; and a cover coupled to said layers.

Other features and advantages of the present invention will be readily appreciated, as the same becomes better understood, after reading the subsequent description taken in conjunction with the accompanying drawings.

### Brief Description of the Drawings

FIG. 1 is a perspective view of one embodiment of a rib cage assembly, according to the present invention, illustrated in operational relationship with a crash test dummy.
FIG. 2 is a side view of the rib cage assembly illustrated in operational relationship with the crash test dummy of FIG. 1.
FIG. 3 is a perspective view of one embodiment, according to the present invention, of a rib for the rib cage assembly of FIGS. 1 and 2.
FIG. 4 is a top view of the rib of FIG. 3.
FIG. 5 is a sectional view taken along line 5-5 of FIG. 4.
FIG. 6 is a perspective view of another embodiment, according to the present invention, of a rib for the rib cage assembly of FIGS. 1 and 2.
FIG. 7 is a top view of the rib of FIG. 6.
FIG. 8 is a sectional view taken along line 8-8 of FIG. 7.

### Description of the Preferred Embodiments

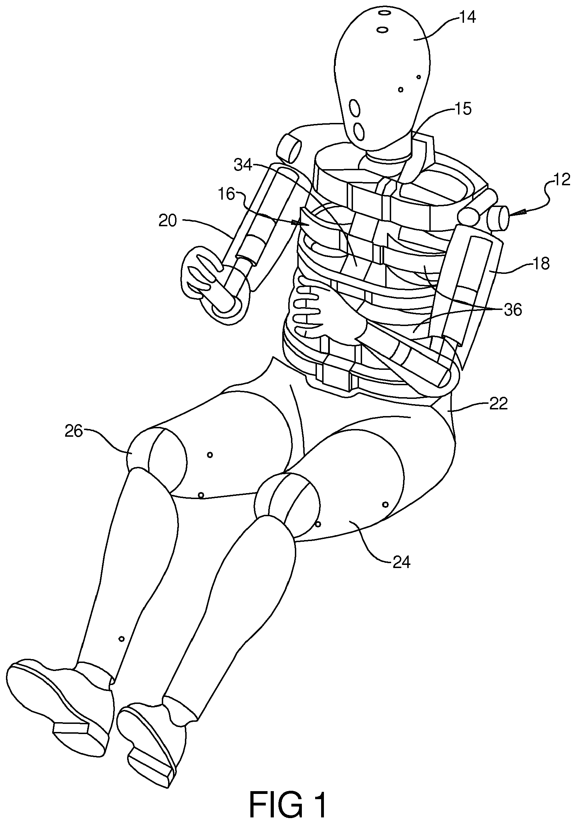

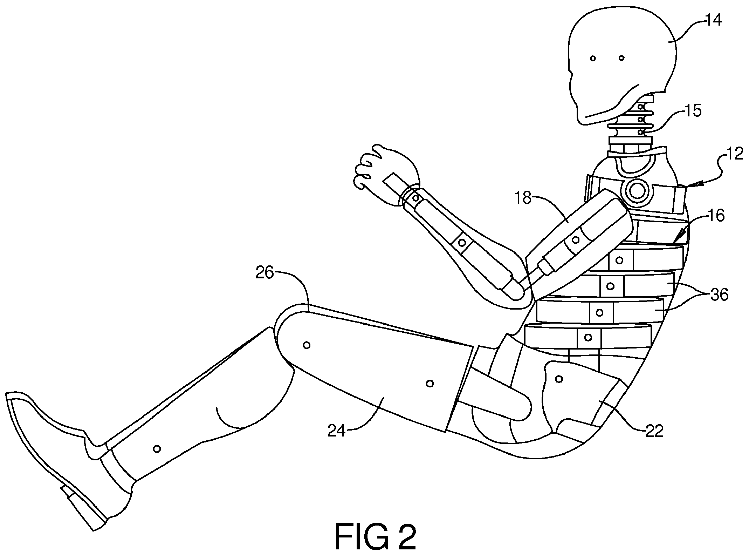

Referring to the drawings and in particular FIGS. 1 and 2, one embodiment of a crash test dummy is generally indicated at 12. The crash test dummy 12 is of a fifth percentile (5%) female type and is illustrated in a sitting position. This crash test dummy 12 is used primarily to test the performance of automotive interiors and restraint systems for adult front and rear seat occupants. The size and weight of the crash test dummy 12 are based on anthropometric studies, which are typically done separately by the following organizations, University of Michigan Transportation Research Institute (UMTRI), U.S. Military Anthropometry Survey (ANSUR), and Civilian American and European Surface Anthropometry Resource (CESAR). It should be appreciated that ranges of motions, centers of gravity, and segment masses simulate those of human subjects defined by the anthropometric data.

As illustrated in FIGS. 1 and 2, the crash test dummy 12 includes a head assembly 14 having a one-piece plastic skull, an instrumentation core, and a vinyl skin. The instrumentation core is removable for access to head instrumentation contained inside the head assembly 14.

The crash test dummy 12 also includes a spine assembly 15 having an upper end mounted to the head assembly 14 by a nodding block (not shown) and a nodding joint (not shown). The spine assembly 15 has a lower end extending into a torso area of the crash test dummy 12 and is connected to a spine mounting weldment (not shown) by an adapter assembly (not shown).

The torso area of the crash test dummy 12 includes a torso or rib cage assembly 16 connected to the spine assembly 15. The spine assembly 15 includes a neck (not shown) connected to the head assembly 14 and a spine box (not shown) connected to the neck. The neck has a lower end connected to by a suitable attachment such as one or more fasteners (not shown) to the spine box. It should be appreciated that the fasteners threadably engage apertures (not shown) in the spine box to secure the neck to the spine box.

The crash test dummy 12 also has a pair of arm assemblies including a right arm assembly 18 and a left arm assembly 20, which are attached to the crash test dummy 12. The left arm assembly 20 includes a clavicle link (not shown), which connects a clavicle (not shown) to the top of the spine assembly 15. It should be appreciated that the right arm assembly 18 is constructed in a similar manner.

As illustrated in the FIGS. 1 and 2, a lower end of the lumbar spine is connected to a lumbar-thoracic adapter (not shown), which is connected to a lumbar to pelvic adapter (not shown). The crash test dummy 12 includes a pelvis assembly 22 connected to the adapter. The crash test dummy 12 also includes a right leg assembly 24 and a left leg assembly 26, which are attached to the pelvis assembly 22. It should be appreciated that various components of the crash test dummy 12 are covered in a urethane or vinyl skin such as a flesh and skin assembly (not shown) for improved coupling with the skeleton of the crash test dummy 12. It should also be appreciated that a lifting ring (not shown) may be attached to the head assembly 14 for lifting the crash test dummy 12 into and out of test fixtures and vehicles.

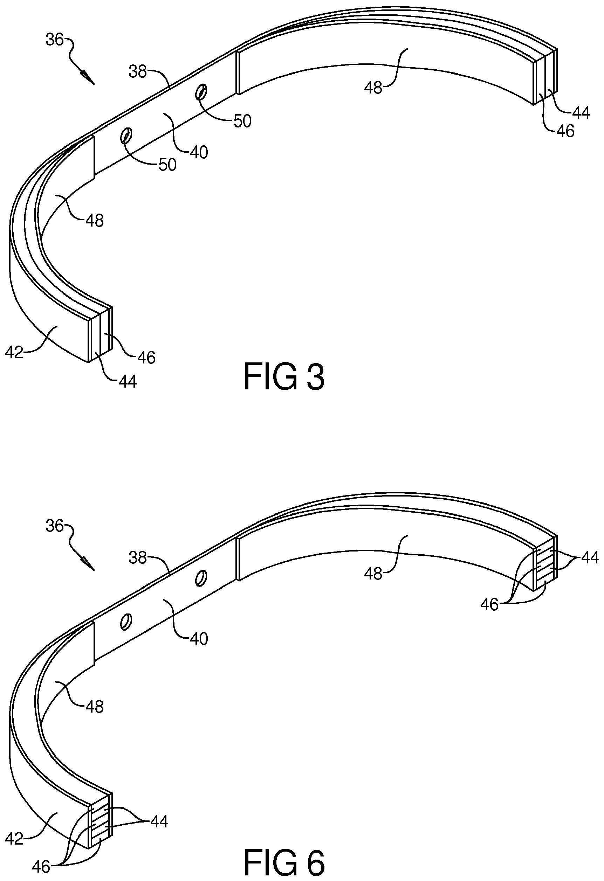

Referring to FIGS. 1 and 2, the rib cage assembly 16 includes one or more ribs 36, according to the present invention. The ribs 36 extend between the spine box and a sternum 34. As illustrated in one embodiment in FIGS. 3 and 6, the ribs 36 are generally arcuate and rectangular in shape, but may be any suitable shape. The ribs 36 are vertically spaced along the spine box and sternum 34. The ribs 36 are connected to the spine box and sternum 34 by a suitable mechanism such as fasteners (not shown).

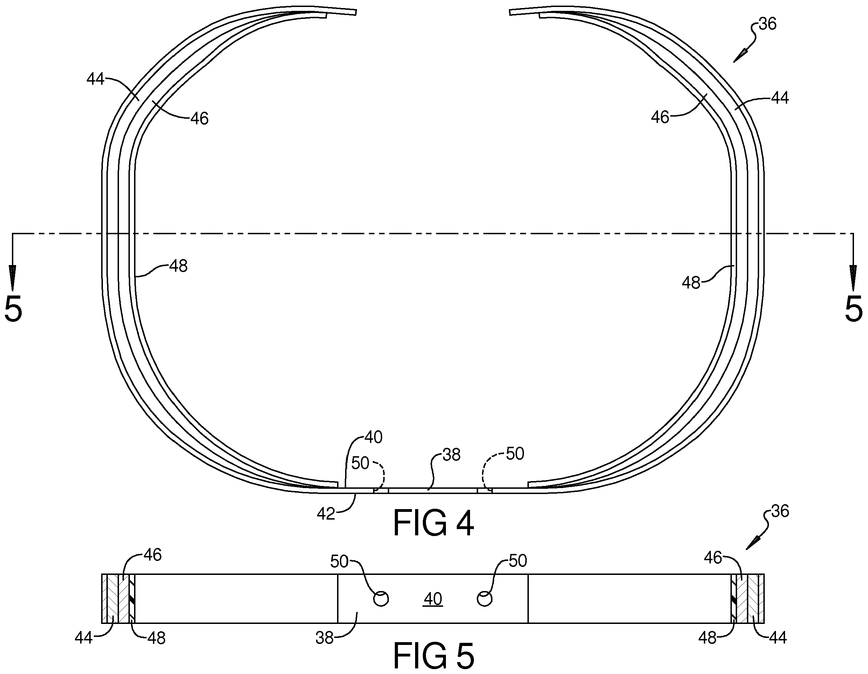

Referring to FIGS. 3-5, one embodiment, according to the present invention, of the rib 36 is shown. Each of the ribs 36 has a general "C" shape. Each rib 36 includes a metal band 38 having and a front surface 40 and a rear surface 42 disposed on opposed sides of the metal band 38. The metal band 38 may be made from any suitable metal material such as steel. Each of the ribs 36 also include one or more layers 44 and 46 attached to the front surface 40 of the metal band 38. The layers 44 and 46 are made of a damping material. The layers 44 and 46 may have the same or different damping characteristics. Each layer 44 and 46 has a thickness from approximately 2.0 millimeters to approximately 6.0 millimeters, preferably approximately 4.0 millimeters. The layers 44 and 46 are disposed in the curved or arcuate portions of the metal band 38. The layers 44 and 46 are bonded to the front surface 40 of the metal band 38 and/or to each other with an adhesive, for example an epoxy, such that a bond line is parallel to the front surface 40 of the metal band 38. In one embodiment, the layers 44 and 46 of damping material may include different damping materials that have a wider range of damping characteristics. It should be appreciated that these damping materials may even be combined with more than two types and/or more than two layers at a time if needed.

Each rib 36 further includes a cover 48 coupled to, attached to, or molded about the layers 44 and 46. The cover 44 is made of a soft urethane material. In one embodiment, the cover 48 is disposed on a side of the layers 44 and 46 opposite the side of the metal band 48. In another embodiment, the cover 48 is disposed on a top, bottom, and side of the layers 44 and 46 opposite the side of the metal band 48. Each rib 36 also includes at least one, preferably a plurality of apertures 50 in a middle portion of the metal band 38 to allow fasteners (not shown) to extend therethrough for connection of the rib cage assembly 16 to the crash test dummy 12. It should be appreciated that the cover 48 covers the composite construction and makes the rib 36 look like a single composite damping material. The damping materials and urethane material for the rib 36 are commercially available from E-A-R of 3M Corporation. It should be appreciated that the materials may also be either FDM Thermoplastics or Polyjet Photopolymers of Stratasys Ltd. It should also be appreciated that the dimensions and thicknesses of the ribs 36 will vary depending on the crash test dummy. It should also be appreciated that this construction could be applied to other rib designs as well, for example, bigger, smaller, and different shapes.

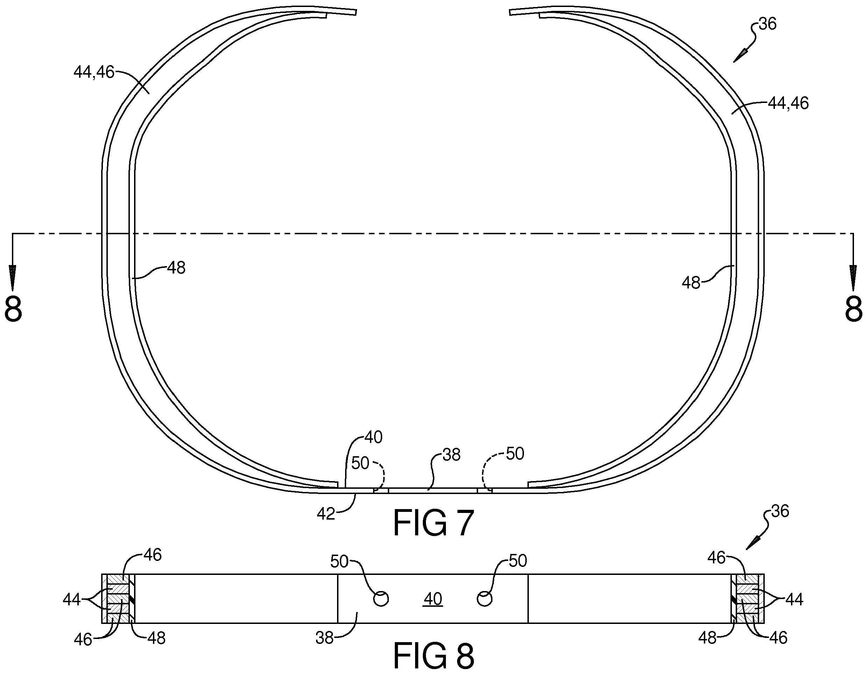

Referring to FIGS. 6-8, another embodiment, according to the present invention, of the rib 36 is shown. In this embodiment, the layers 44 and 46 are bonded to the front surface 40 of the metal band 38 and/or to each other with an adhesive such that the bond line may be perpendicular to the metal band 38. This construction has several advantages. First, since the bond line is perpendicular to the strain field, it is less likely that one condition will fracture the entire bond line. The strain field is not uniform in a section perpendicular to the metal band 38 - the strain field changes with distance from the metal band 38. Even if a small section of adhesive is broken, most of the adhesive will be intact if oriented this way. Second, since each type of damping material sees the entire range of strain values, the rib 36 gives a much truer composite damping material effect, which is more likely to be a linear combination than if the damping materials are in layers parallel to the metal band 38. It should be appreciated that, as with parallel layers, multiple layers and types of damping material could be combined to provide a wider range of tuning.

In yet another embodiment, added to either bonding scheme of FIGS. 3-5 or FIGS. 6-8 to create a composite damping material to tune performance of the rib 36, is a layer of rigid plastic to the side of the damping material away from the metal band 38. In this embodiment, the layer of plastic may be added to opposed sides of the metal band 38. This construction could be used with either orientation of the damping material bond lines. This layer of plastic adds stiffening with little damping characteristic. The layer of plastic shifts the center of bending slightly away from the metal band 38, due to its having a much lower stiffness than the metal band 38, and keeps the strain levels on the metal band 38 within acceptable ranges. It should be appreciated that, since plastics with very high elongations are easy to obtain, the layer of plastic can easily survive the high strain conditions on the inside region of the composite damping material of the rib 36. It should also be appreciated that this adds the ability to tune force and displacement separately from hysteresis for the rib 36. It should be further appreciated that the stiffness, thickness, and length of the layer of plastic can be adjusted for additional tuning.

Accordingly, a method of making the rib 36 and the rib cage assembly 16 of the present invention includes making the ribs 36 according to the construction of either FIGS. 3-5 or FIGS. 6-8.

The present invention has been described in an illustrative manner. It is to be understood that the terminology, which has been used, is intended to be in the nature of words of description rather than of limitation.

Many modifications and variations of the present invention are possible in light of the above teachings. Therefore, the present invention may be practiced other than as specifically described.

## Claims

1. A rib (36) for a crash test dummy (12) comprising:
a metal band (38);
a plurality of layers (44, 46) of damping material disposed on a portion of said metal band (38); and
a cover (48) coupled to said layers (44, 46).

2. A rib (36) as set forth in claim 1 wherein said metal band (38) is made of steel.

3. A rib (36) as set forth in claim 1 or claim 2 wherein said layers (44, 46) are made of same damping material.

4. A rib (36) as set forth in claim 1 or claim 2 wherein said layers (44, 46) are made of different damping materials.

5. A rib (36) as set forth in any preceding claim wherein said layers (44, 46) are bonded to said metal band (38) such that a bond line is parallel to said metal band (38).

6. A rib (36) as set forth in any one of claims 1 to 4 wherein said layers (44, 46) are bonded to said metal band (38) such that a bond line is perpendicular to said metal band (38).

7. A rib (36) as set forth in any preceding claim including an adhesive to bond said layers (44, 46) to said metal band (38).

8. A rib (36) as set forth in any preceding claim wherein said metal band (38) is "C" shaped.

9. A rib (36) as set forth in claim 8 wherein said layers (44, 46) are bonded to arcuate portions of said metal band (38).

10. A rib (36) as set forth in any preceding claim wherein said cover (48) is made of a urethane material.

11. A rib (36) as set forth in any preceding claim including a layer of plastic bonded to an inner facing one of said layers (44, 46).

12. A crash test dummy (12) comprising:
a body;
a rib cage assembly (16) operatively attached to said body;
said rib cage assembly (16) including a plurality of ribs, each of said ribs (36) having a metal band, a plurality of layers of damping material disposed on a portion of said metal band, and a cover coupled to said layers.

13. A crash test dummy as set forth in claim 12 wherein each of the ribs is a rib according to any one of claims 2 to 11.
